# EUROPEAN PATENT APPLICATION

(11) **EP 4 611 472 A1**
(43) Date of publication of application: **03.09.2025**
(21) Application number: 23929238.6
(22) Date of filing: 29.03.2023
(51) Int. Cl.: H04W 74/08

(54) **METHOD AND APPARATUS FOR DETERMINING CONTENTION WINDOW, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); ZHAO, Zhenshan, Dongguan, Guangdong 523860 (CN); WU, Zuomin, Dongguan, Guangdong 523860 (CN)
(74) Representative: Penza, Giancarlo
(86) International application number: PCT/CN2023/084692
(87) International publication number: WO 2024/197639

(57) **Abstract**

A method and apparatus for determining a contention window, a device, and a storage medium, relating to the technical field of communications. The method comprises: if transmission of a terminal device includes NACK-Only-based transmission and/or blind retransmission, determining the latest contention window used for first transmission as a contention window used for the transmission of the terminal device (710). In sidelink communication, the latest contention window used for first transmission is determined as a contention window used for sidelink transmission of a terminal device, and the method for determining the contention window is designed for two transmission modes, i.e., NACK-Only-based transmission and blind retransmission, thereby preventing a plurality of terminal devices from using the same contention window during LBT, and reducing mutual interference between the terminal devices.

## Description

### TECHNICAL FIELD

Embodiments of the disclosure relate to the technical field of communication, in particular to a method and apparatus for determining a contention window, a device, and a storage medium.

### BACKGROUND

When operating on unlicensed spectrum for sidelink (SL) communication, a terminal device needs to determine a contention window during type 1 listen before talk (LBT) procedure. However, further research is required on how the terminal device determines the contention window.

### SUMMARY

Embodiments of the disclosure provide a method and apparatus for determining a contention window, a device, and a storage medium. The technical solutions are as follows.

According to an aspect in embodiments of the disclosure, there is provided a method for determining a contention window. The method is performed by a terminal device, and includes the following operation.

When transmission of the terminal device comprises a negative acknowledgement-only (NACK-Only) based transmission and/or a blind retransmission, a latest contention window used for first transmission is determined as a contention window used for the transmission of the terminal device.

According to an aspect in embodiments of the disclosure, there is provided an apparatus for determining a contention window. The apparatus includes a processing module.

The processing module is configured to, when transmission of a terminal device comprises a NACK-Only based transmission and/or a blind retransmission, determine a latest contention window used for first transmission as a contention window used for the transmission of the terminal device.

According to an aspect in embodiments of the disclosure, a terminal device is further provided. The terminal device comprises a memory for storing a computer program, and a processor for executing the computer program to implement the method for determining contention window described above.

According to an aspect in embodiments of the disclosure, a computer-readable storage medium is further provided. The computer-readable storage medium stores a computer program that, when executed by a processor, causes the processor to implement the method for determining the contention window described above.

According to an aspect in embodiments of the disclosure, a chip including programmable logic circuits and/or program instructions is further provided. When the chip is in operation, the chip implements the method for determining the contention window described above.

According to an aspect in embodiments of the disclosure, a computer program product is further provided. The computer program product includes computer instructions stored in a computer-readable storage medium. A processor reads and executes the computer instructions in the computer-readable storage medium to implement the method for determining the contention window described above.

The technical solution provided in the embodiments of the disclosure may include the following beneficial effects.

In sidelink communication, the latest contention window used for the first transmission is determined as a contention window used for sidelink transmission of the terminal device, and the method for determining the contention window is designed for two transmission modes, i.e., the NACK-Only based transmission and the blind retransmission, thereby preventing multiple terminal devices from using a same contention window during LBT, and reducing mutual interference between the terminal devices.

### BRIEF DESCRIPTION OF THE DRAWINGS

FIG. 1 is a schematic diagram of a network architecture according to an embodiment of the disclosure.
FIG. 2 is a flowchart of a type 1 LBT according to an embodiment of the disclosure.
FIG. 3 is a schematic diagram of an adjustment of a contention window according to an embodiment of the disclosure.
FIG. 4 is a schematic diagram of a determination of the contention window according to an embodiment of the disclosure.
FIG. 5 is a schematic diagram of Mode A and Mode B of a sidelink communication according to an embodiment of the disclosure.
FIG. 6 is a schematic diagram of a physical layer structure of a New Radio (NR) SL according to an embodiment of the disclosure.
FIG. 7 is a flowchart of a method for determining the contention window according to an embodiment of the disclosure.
FIG. 8 is a schematic diagram of a transmission of a terminal device and a first transmission according to an embodiment of the disclosure.
FIG. 9 is a flowchart of a method for determining the contention window according to another embodiment of the disclosure.
FIG. 10 is a block diagram of an apparatus for determining the contention window according to an embodiment of the disclosure.
FIG. 11 is a schematic structural diagram of the terminal device according to an embodiment of the disclosure.

### DETAILED DESCRIPTION

To provide a clearer understanding of the objectives, technical solutions, and advantages of the disclosure, the embodiments of the disclosure will be described in further detail with reference to the accompanying drawings.

The network architecture and business scenarios described in the embodiments of the disclosure are intended to illustrate the technical solutions of the embodiments of the disclosure more clearly, and do not constitute limitations on the technical solutions of the embodiments of the disclosure. It is understood by those of ordinary skilled in the art that, with the evolution of the network architectures and the emergence of new business scenarios, the technical solutions of the embodiments of the disclosure are equally applicable to similar technical problems.

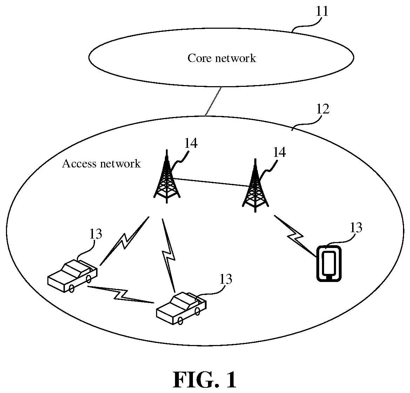

Referring to FIG. 1, it illustrates a schematic diagram of a network architecture according to an embodiment of the disclosure. The network architecture may include: a core network 11, an access network 12, and a terminal device 13.

The core network 11 includes several core network devices. The primary functions of the core network device are to provide user connection, user management, and service bearer capabilities, serving as a bearer network to provide interfaces to external networks. For example, the core network in a 5th Generation (5G) NR system may include devices such as an access and mobility management function (AMF) entity, a user plane function (UPF) entity, and a session management function (SMF) entity.

The access network 12 includes several access network devices 14. The access network in the 5G NR system may be referred to as a new generation-radio access network (NG-RAN). The access network device 14 is a device deployed in the access network 12 to provide wireless communication function for the terminal device 13. The access network device 14 may include various forms of macro base stations, micro base stations, relay stations, access points, and the like. In systems employing different radio access technologies, the names of devices with the functionality of the access network device may be different. For example, in the 5G NR system, the devices are referred to as gNodeB or gNB. With the evolution of communication technology, the name "access network device" may change. For convenience of description, the above-mentioned devices that provide wireless communication function for the terminal device 13 are collectively referred to as access network device in the embodiments of the disclosure.

There are typically multiple terminal devices 13, and one or more terminal devices 13 may be distributed within the cell managed by each access network device 14. The terminal device 13 may include various handheld devices, vehicle-mounted devices, wearable devices, computing devices, or other processing devices connected to a wireless modem, that have wireless communication capabilities, various forms of user equipment (UE), mobile stations (MSs), and the like. For convenience of description, the above-mentioned devices are collectively referred to as terminal device, that is, the terminal device and UE mentioned in the embodiments of the disclosure may be understood to have the same meaning. The access network device 14 and the core network device communicate with each other through a certain over-the-air technology, such as the NG interface in the 5G NR system. The access network device 14 and the terminal device 13 communicate with each other through a certain over-the-air technology, such as a Uu interface.

The terminal device 13 and the terminal device 13 (for example, a vehicle-mounted device and other devices (for example, other vehicle-mounted devices, mobile phones, road side units (RSU), etc.) may communicate with each other through a direct communication interface (for example, a ProSe Communication 5 (PC5) interface), and accordingly, the communication link established based on the direct communication interface may be referred to as a direct link or SL. The SL transmission refers to that the transmission of communication data is directly performed between terminal devices through sidelink. Different from the traditional cellular system where communication data is received or sent through an access network device, the SL transmission has the characteristics of short time-delay, low overhead and the like, which is suitable for communication between two terminal devices in close geographical proximity (such as a vehicle-mounted device and other peripheral devices in close geographical proximity). It should be noted that, in FIG. 1, the SL technology is exemplified solely by vehicle-to-vehicle communication within the vehicle to everything (V2X) scenario. However, it is applicable to scenarios where direct communication between various terminal devices is required. In other words, the terminal device in the disclosure refers to any device that uses the SL technology to communicate.

The "5G NR system" in the embodiments of the disclosure may also be referred to as a "5G system" or a "NR system", but those skilled in the art may understand its meaning. The technical solutions described in the embodiments of the disclosure may be applied to the 5G NR system, as well as to its subsequent evolutionary systems.

Before introducing the technical solution of the disclosure, some background technical knowledge related to the disclosure will be introduced and explained. The following related technologies, as an alternative solution, may be arbitrarily combined with the technical solutions in the embodiments of the disclosure, all of which belong to the protection scope of the embodiments of the disclosure. The embodiments of the disclosure include at least some of the following contents.

### 1. Unlicensed spectrum

Unlicensed spectrum is the spectrum divided by countries and regions that can be used for communications between radio equipment. The unlicensed spectrum is generally considered to be a shared spectrum. That is, as long as communication devices in different communication systems meet the regulatory requirements set by the countries and regions on the unlicensed spectrum, the unlicensed spectrum can be used, and there is no need to apply for a dedicated spectrum license from the government. For example, Wireless Fidelity (WiFi) systems are deployed on unlicensed spectrum.

Firstly, regulations impose restrictions on the bandwidth for transmissions by communication devices over unlicensed spectrum. That is, the span of the bandwidth occupied by the sending of the communication device is at least L% of the total spectrum bandwidth, with L=80 being a common regulatory requirement. For example, assuming that the total bandwidth is 100 physical resource blocks (PRBs), the difference between the lowest PRB index and the highest PRB index used by the communication device during the sending should be at least 80. If the communication device requires 2 PRBs to send data and occupies PRB 1, then the index of the other PRB is at least 81. In some cases, the communication device only needs to satisfy that the bandwidth occupied by the sending is at least 2 MHz.

### 2. LBT mechanism

In unlicensed spectrum, all communication devices should perform LBT before sending signal. That is, the communication device needs to perform channel listening before sending signal on channels of unlicensed spectrum. The communication device may send the signal only when result of the channel listening is that the channel is idle.

LBT mechanism has the following types.

### (1). Type 1

The communication device firstly listens to a channel for a time duration with a length of Td. After listening that all listening slots in the time duration are idle, and after N in the following operation is equal to 0, the LBT is successfully performed, and thus, the communication device may occupy the channel to send data. Otherwise, the LBT fails, and thus, the communication device cannot access the channel.

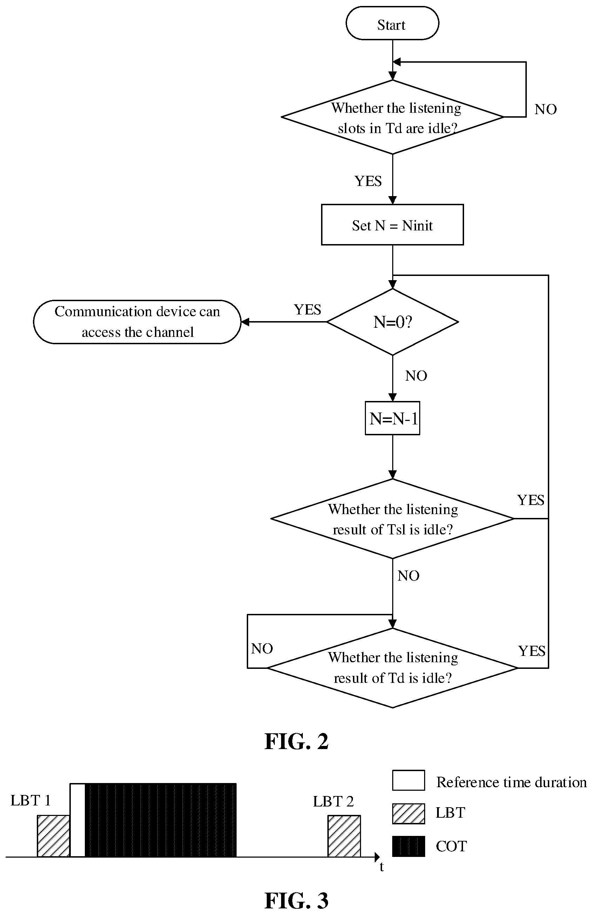

Exemplarily, as illustrated in FIG. 2, FIG. 2 illustrates a flowchart of a type 1 LBT.

Operation 1: set N = Ninit, where Ninit is a random value ranging from 0 to CWₚ, then skip to operation 4.

Operation 2: if N > 0, then the communication device will subtract N by 1, that is, set N = N-1.

Operation 3: continue to listen to a channel for a time length of one listening slot. If the channel is idle, then skip to operation 4; otherwise, skip to operation 5.

Operation 4: stop if N = 0; otherwise, skip to operation 2.

Operation 5: continue to listen to the channel until having listened that one listening slot is busy in a time duration with a duration of Td, or that all listening slots in the time duration of Td are idle.

Operation 6: if all listening slots in the time duration with the length of Td are idle, then skip to operation 4; otherwise, skip to operation 5.

In the above-mentioned operations, if no skipping is indicated, the operations are to be executed sequentially. Exemplarily, the above one listening slot is denoted as Tsl, and Tsl is 9 microseconds.

Ninit is a random value ranging from 0 to CWₚ. CWₚ is related to the channel access priority of the communication device. CWₚ may also be referred to as a contention window (CW) corresponding to a specific priority, or a CW determined based on a priority. The communication device determines the values of CW_{min,p} , CW_{max,p} and allowed CWₚ based on the priority of the accessed channel. That is, the communication device determines the minimum value, maximum value, and allowed values of the contention window based on the priority. For example, in Table 1, when the channel access priority of the communication device is 3, the minimum value of the contention windows used by the communication device is 15, the maximum value of the contention windows used by the communication device is 1023, and the allowed values of the contention window used by the communication device are {15, 31, 63, 127, 255, 511, 1023}. In fact, the communication device maintains the sizes of the corresponding contention windows for each type of priority. Before performing the above-mentioned operation 1, the contention window corresponding to each type of priority may be adjusted based on certain rules, and then the contention window used when performing the LBT this time may be determined based on the channel access priority, thereby Ninit is determined.

For example, the communication device maintains CW₁, CW₂, CW₃ and CW₄. When the communication device performs type 1 LBT, before performing the above-mentioned operation 1, the communication device increases the CW₁, CW₂, CW₃ and CW₄ to the next larger allowed value. If the channel access priority of the communication device this time is 1, the communication device uses the adjusted CW₁ to perform the type 1 LBT.

**Table 1: correspondence between the channel access priority and CWₚ**

| channel access priority (p) | mₚ | CW_{min,p} | CW_{max,p} | T_{mcot,p} | allowed values of CWₚ |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023 } |
| 4 | 7 | 15 | 1023 | 6 or 10 ms | {15,31,63,127,255,511,1023 } |

The above Td = Tf + mₚ* Tsl, Tf is equal to 16 microseconds, and mₚ is related to the channel access priority. For example, the corresponding mₚ may be determined based on the priorities in Table 1.

In case that the communication device performs the above operations and successfully performs LBT, if the communication device does not immediately access the channel, when the communication device needs to send data and access the channel, it does not need to perform the above entire type 1 LBT procedure again, but only to listen the occupancy status of the channel for the time duration of Td + at least one Ts1. If the channel is idle, the communication device may directly access the channel to send signal.

When the communication device successfully performs LBT and accesses the channel, the time that the communication device occupies the channel is referred to as a channel occupancy time (COT). Within a COT, the communication device may transmit continuously or discontinuously, but the total transmission time does not exceed T_{mcot, p}. T_{mcot, p} is related to the channel access priority. For example, T_{mcot, p} may be looked up from Table 1.

### (2). Type 2

Unlike type 1 LBT, type 2 LBT only requires the communication device to listen to a channel for a fixed duration, and if the listening slots are idle within the fixed duration, the communication device may directly access the channel. Specifically, type 2 is further divided into three sub-types: type 2A, type 2B, and type 2C.

Type 2A: the communication device may listen to a channel for a duration of 25 microseconds (denoted as Tshort). If the listening slots in the Tshort are idle, the communication device may access the channel directly.

Type 2B: the communication device may listen to a channel for a duration of 16 microseconds (denoted as Tf). If the listening slots in the Tf are idle, the communication device may access the channel directly.

Type 2C: the communication device may access the channel directly without performing LBT. This type may only be applied to the case where the interval between this transmission and the last transmission before this transmission is less than or equal to 16 microseconds. At the same time, the duration of this transmission does not exceed 584 microseconds.

### 3. Adjustment of a contention window

FIG. 3 illustrates an example in which the above communication device adjusts the contention window corresponding to each priority before performing the operation 1 of the type 1 LBT.

The communication device maintains the contention windows corresponding to respective priorities, and the communication device initializes the contention window corresponding to each priority as a minimum contention window among the allowed contention windows for each priority. For example, the communication device maintains the CW₁, CW₂, CW₃, and CW₄, which correspond to the channel access priorities 1, 2, 3, and 4, respectively. The communication device initializes the CW₁, CW₂, CW₃, and CW₄ as contention windows having minimum values of 3, 7, 15, 15 among the contention windows allowed for each priority in Table 1, respectively.

The communication device adjusts the contention window corresponding to each priority before performing the operation 1 of the above type 1 LBT. The communication device determines a reference time duration, and if at least one value of the hybrid automatic repeat request (HARQ) feedback values corresponding to one or more physical downlink shared channels (PDSCHs) transmitted in the reference time duration is acknowledgement (ACK), the contention window corresponding to each priority is then set to be the contention window having the minimum value among the contention windows allowed for each priority; otherwise, the communication device increases the contention window corresponding to each priority to the next allowed value corresponding to each priority. The above reference time duration generally refers to the initial time duration during which the channel is occupied for the transmission after the latest type 1 LBT is successfully performed by the communication device. For example, as illustrated in FIG. 3, the communication device maintains the CW₁, CW₂, CW₃, and CW₄. Before performing the operation 1 of a certain type 1 LBT, such as LBT 2, the communication device adjusts the CW₁, CW₂, CW₃, and CW₄. The channel occupied by the last transmission of the communication device is the channel accessed after the last Type 1 LBT (LBT 1) is successfully performed. Therefore, the communication device determines the HARQ feedback values corresponding to the one or more PDSCHs transmitted during the reference time duration of the COT. If at least one of the HARQ feedback values is the ACK, the CW₁, CW₂, CW₃, and CW₄ are then set to be the contention windows having the minimum values, namely 3, 7, 15, and 15, among the contention windows allowed for respective priorities in Table 1. Otherwise, each of the CW₁, CW₂, CW₃ and CW₄ is increased to the next allowed value. Assuming that the values of CW₁, CW₂, CW₃, CW₄ are 3, 7, 15 and 15 before adjustment, then they will be increased to 7, 15, 31 and 31 according to Table 1, respectively.

In the above process of maintaining and adjusting the contention windows corresponding to respective priorities, for a contention window CWₚ under a specific priority p, if the CWₚ is already the contention window having a maximum value among the contention windows corresponding to the priority p, the CWₚ is then increased to a next allowed value, which is still the contention window having a maximum value among the contention windows corresponding to the priority p. When the CWₚ has been the contention window, having the maximum value among the contention windows corresponding to the priority p, for k consecutive times and is used to generate Ninit, the CWₚ is then set to be the contention window having the minimum value among the contention windows corresponding to the priority p.

Furthermore, if the priority of the channel accessed and used via the type 1 LBT for the transmission of the communication device is p, and the transmission is not associated with the corresponding HARQ feedback, the contention window used by the communication device is the latest CWₚ for the first transmission.

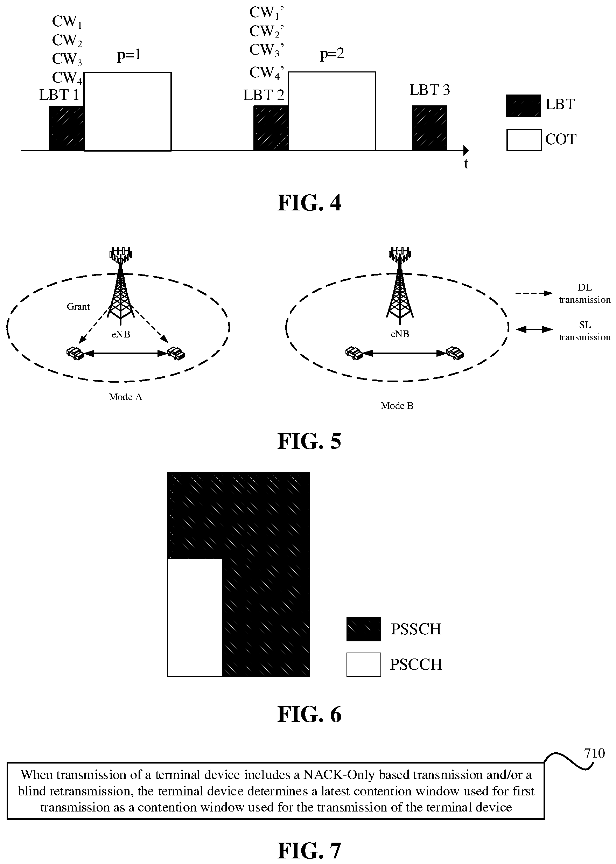

Optionally, the first transmission is any downlink transmission. As illustrated in FIG. 4, an upcoming transmission accessed by the communication device based on LBT 3 (which is a type 1 LBT) is not associated with HARQ feedback. The upcoming transmission is, for example, a broadcast transmission, and the channel access priority of the broadcast transmission is 1. If the first transmission is any downlink transmission, the contention window used by the communication device during the LBT 3 is CW₁'.

Optionally, the first transmission is any downlink transmission based on a type 1 LBT. As illustrated in FIG. 4, an upcoming transmission accessed by the communication device based on LBT 3 (which is a type 1 LBT) is not associated with HARQ feedback. The upcoming transmission is, for example, a broadcast transmission, and the channel access priority of the broadcast transmission is 1. The first transmission is any downlink transmission based on the type 1 LBT. In FIG. 4, LBT 2 is the type 1 LBT, and the contention window used by the communication device during the LBT 3 is CW₁'.

Optionally, the first transmission is any downlink transmission based on a type 1 LBT and with a channel access priority of p. As illustrated in FIG. 4, an upcoming transmission accessed by the communication device based on LBT 3 (which is a type 1 LBT) is not associated with HARQ feedback. The upcoming transmission is, for example, a broadcast transmission, and the channel access priority of the broadcast transmission is 1. The first transmission is any downlink transmission based on the type 1 LBT and with the channel access priority of p. In FIG. 4, each of LBT 1 and LBT 2 is the type 1 LBT, the channel access priority of the transmission corresponding to the LBT 1 is 1, the channel access priority of the transmission corresponding to the LBT 2 is 2, and the contention window used by the communication device during the LBT 3 is CW₁.

When there is no the first transmission, the contention window having the minimum value among the contention windows corresponding to the priority p is used. As illustrated in FIG. 4, an upcoming transmission accessed by the communication device based on LBT 3 (which is a type 1 LBT) is not associated with HARQ feedback. The upcoming transmission is, for example, a broadcast transmission, and the channel access priority of the broadcast transmission is 1. If the communication device does not perform any transmission before the broadcast transmission, the contention window used by the communication device during the LBT 3 is the contention window having the minimum value (i.e., 3) among the contention windows allowed for the channel access priority 1.

It should be noted that, CW₁ to CW₄ are the contention windows, which correspond to the priorities and have been adjusted by the communication device during the LBT 1, respectively. The communication device also adjusts the contention windows corresponding to the priorities during the LBT 2, denoted as CWₚ', where p is an integer from 1 to 4.

### 4. SL transmission

SL transmission refers to direct transmission between terminals through sidelink, which is different from the manner of receiving and sending communication data through a base station in the traditional cellular system. In vehicle to everything (V2X) system, SL transmission (vehicle to vehicle, V2V) is also supported, thereby achieving higher spectral efficiency and lower transmission time-delay. Regarding SL transmission, as illustrated in FIG. 5, two transmission modes, i.e., mode A and mode B, are proposed in the related art.

In the mode A, the transmission resources for the SL UE are allocated by the base station. Based on the resources allocated by the base station, the SL UE sends data on the sidelink. The base station may allocate resources for a single transmission or resources for a semi-static transmission for the SL UE.

In the mode B, the SL UE selects a resource in the resource pool for data transmission. Specifically, the SL UE may select the transmission resource in the resource pool by listening or by random selection.

The SL UE is a terminal that performs sidelink transmission, and may be a terminal in device-to-device (D2D) or a vehicle terminal in the V2X.

The physical layer structure of the NR SL is illustrated in FIG. 6.

The physical sidelink control channel (PSCCH) is used for transmitting the first sidelink control information, the physical sidelink shared channel (PSSCH) is used for carrying data and the second sidelink control information, and the PSCCH and the PSSCH are sent within the same slot. The first sidelink control information is carried in the PSCCH, and mainly includes a field related to resource listening, so as to facilitate other pieces of UE to perform resource exclusion and resource selection after decoding. The PSSCH carries the second sidelink control information in addition to data, and the second sidelink control information mainly includes a field related to data demodulation, so as to facilitate other pieces of UE to demodulate data in the PSSCH.

Broadcast and groupcast/multicast are also supported in SL. The UE may send data through the same PSSCH to all user devices that may receive the PSSCH (broadcast). The UE may send data to a group of user devices through the same PSSCH (groupcast). For example, the group of user devices may be within a certain distance range, or have a stable connection with the transmitting UE.

### 5. HARQ feedback

HARQ feedback refers to that the receiving terminal decodes the data from the transmitting terminal, if the decoding fails, the receiving terminal feeds back NACK, and if the decoding succeeds, the receiving terminal feeds back ACK. The transmitting terminal determines whether to perform a retransmission based on HARQ feedback information from the receiving terminal. At the same time, the receiving terminal will merge the data sent multiple times by the transmitting terminal, to increase the probability of successful decoding.

There are two common HARQ feedback modes: NACK-Only and ACK-or-NACK.

The NACK-Only mode means that the receiving terminal only feeds back NACK to the transmitting terminal when the reception fails, and does not feed back NACK when the reception is successful.

The ACK-or-NACK mode means that the receiving terminal feeds back NACK to the transmitting terminal when the reception fails, and feeds back ACK to the transmitting terminal when the reception is successful.

The NACK-Only mode has the issue of dis-continuous transmission (DTX). When the receiving terminal is decoding, it generally decodes the control information first and then decodes the data based on the content in the control information. If the control information is not listened by the receiving terminal, the receiving terminal will not give any feedback. In the NACK-Only mode, at this time, the transmitting terminal cannot determine whether the receiving terminal has successfully decoded the data or the receiving terminal has not detected the control information at all.

In SL communication, for unicast, only the ACK-or-NACK feedback mode is supported, and for groupcast, both the ACK-or-NACK feedback mode and the NACK-Only feedback mode are supported. In the groupcast scenario, the transmitting terminal sends data to a group of receiving terminals on a same resource.

When the group of receiving terminals feed back HARQ information through the NACK-Only mode, all receiving terminals in the group of receiving terminals feed back NACK on a same resource. The transmitting terminal may determine whether to perform a retransmission based on whether NACK is detected on the resource.

When the group of receiving terminals feed back HARQ information through the ACK/NACK mode, all receiving terminals in the group of receiving terminals feed back ACK or NACK on their respective independent resources. The transmitting terminal may determine whether to perform a retransmission based on the detection of ACK or NACK on respective resources. For example, retransmission is performed when at least one NACK is received, and retransmission is not performed when all ACKs are received.

Exemplarily, the resource used to feed back NACK or ACK by the above receiving terminal is a PSFCH resource.

At the same time, the SL system also supports blind retransmission, where the transmitting terminal sends a certain number of transmissions without the receiving terminal providing HARQ feedback.

### 6. Multi-consecutive slots transmission (MCSt)

As mentioned above, on the unlicensed spectrum, a communication device needs to perform LBT first, and may access the channel only after the LBT is successful. When the communication device successfully performs the LBT and accesses the channel, the time that the communication device occupies the channel is called COT. Within the COT, the communication device may transmit continuously or discontinuously. Therefore, in order to more fully utilize the COT initiated after the successful LBT, the concept of MCSt transmission is introduced in SL in unlicensed spectrum (SL-U). That is to say, the communication device performs continuous transmission on multiple slots, thereby improving the utilization rate of the COT. At the same time, continuous use/occupation of channel is also advantageous to compete for channel with different systems. For example, when the SL-U terminal adopts continuous transmission, the channel is continuously occupied, which prevents WiFi users from successfully performing LBT and accessing the channel simultaneously.

When SL operates in unlicensed spectrum (i.e., SL-U), the terminal device also needs to adjust and determine the contention window when performing a type 1 LBT. As introduced above, transmission modes, such as the ACK-or-NACK, the NACK-Only, and the blind retransmission, are supported in SL system. For the NACK-Only mode, since the receiving terminal also needs to perform LBT when sending NACK, and cannot send NACK when LBT fails, this leads to the aggravation of the DTX problem. Therefore, in the NACK-Only mode, it is difficult to adjust the contention window based on the NACK feedback and then determine the contention window based on the channel access priority. How to determine the contention window for the NACK-Only based transmission is a problem that needs to be solved. At the same time, SL-U introduces an MCSt, and how to determine the contention window under MCSt transmission is also a problem that needs to be solved.

Referring to FIG. 7, it illustrates a flowchart of the method for determining the contention window according to an embodiment of the disclosure. The method may be applied to the network architecture illustrated in FIG. 1. The method is performed by the terminal device. The method may include an operation 710 as follows.

In the operation 710, when transmission of a terminal device includes a NACK-Only based transmission and/or a blind retransmission, the terminal device determines a latest contention window used for first transmission as a contention window used for the transmission of the terminal device.

In some embodiments, the latest contention window used for the first transmission refers to a contention window that was most recently determined or adjusted by the terminal device when performing the first transmission, or a contention window that was determined or adjusted by the terminal device when performing the most recent first transmission. The aforementioned most recent first transmission refers to one first transmission that is closest in time to the transmission of the terminal device.

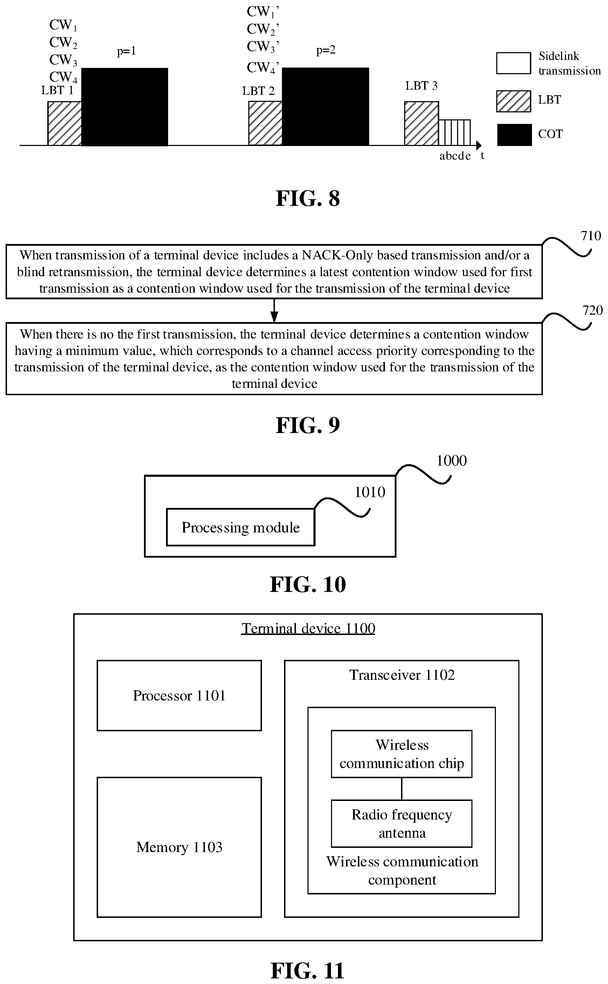

As illustrated in FIG. 8, LBT 1 and LBT 2 are channel access procedures corresponding to ongoing transmission or completed transmission by the terminal device, and p refers to the channel access priority of the current transmission. For example, the channel access priority of transmission accessed by the terminal device during the LBT 1 is 1, and the channel access priority of transmission accessed by the terminal device during the LBT 2 is 2. CW₁ (CW₁'), CW₂ (CW₂'), CW₃ (CW₃'), and CW₄ (CW₄') correspond to contention windows for the transmissions with channel access priorities 1, 2, 3, and 4, respectively. Before performing a transmission based on type 1 LBT, the terminal device may adjust the contention window corresponding to each channel access priority. For example, the LBT 2 performed by the terminal device is a type 1 LBT, and CW₁, CW₂, CW₃, and CW₄ are adjusted to CW₁', CW₂', CW₃', and CW₄', respectively. The channel access priority of the type 1 LBT based transmission accessed by the terminal device during the LBT 2 is 2, and the contention window used for the transmission is CW₂'.

In some embodiments, the transmission of the terminal device is a type 1 LBT based transmission. The type 1 LBT based transmission means that the channel access type used for the transmission is the type 1 LBT. Since a type 2 LBT based transmission does not need to determine a contention window, the type 2 LBT based transmission is not considered in the embodiments of the disclosure.

In some embodiments, the transmission of the terminal device is an upcoming transmission or a pending transmission. Since the terminal device needs to perform LBT before performing transmission, and the terminal device needs to listen to the channel based on a contention window during the LBT, it is necessary to determine the contention window used for the transmission before performing the transmission.

In some embodiments, the transmission of the terminal device is a sidelink transmission. For example, the transmission of the terminal device may include a PSCCH transmission and/or a PSSCH transmission.

In some embodiments, the transmission of the terminal device is a sidelink transmission based on type 1 LBT, such as a PSCCH transmission based on type 1 LBT, or a PSSCH transmission based on type 1 LBT, or the like.

In some embodiments, the transmission of the terminal device is a NACK-Only based transmission. The NACK-Only based transmission means that a receiving terminal provides HARQ feedback for the transmission of the terminal device based on the NACK-Only mode.

Exemplarily, as illustrated in FIG. 8, the upcoming transmission accessed by the terminal device based on LBT 3 (which is a type 1 LBT) includes only a sidelink transmission a. The sidelink transmission a is a NACK-Only based sidelink transmission. That is to say, for the data transmitted over the sidelink transmission a, the receiving terminal uses the NACK-Only mode to provide sidelink HARQ feedback.

In some embodiments, the transmission of the terminal device is a blind retransmission. The blind retransmission means that the transmission of the terminal device is not associated with HARQ feedback.

Exemplarily, as illustrated in FIG. 8, the upcoming transmission accessed by the terminal device based on LBT 3 (which is a type 1 LBT) includes only a sidelink transmission a. The sidelink transmission a is a blind retransmission. That is to say, for the data transmitted over the sidelink transmission a, the receiving terminal does not require to provide HARQ feedback.

In some embodiments, the transmission of the terminal device may be a single slot transmission or an MCSt.

In some embodiments, the transmission of the terminal device is a single slot transmission.

Exemplarily, as illustrated in FIG. 8, each of the sidelink transmissions a to e represents a single slot transmission, and the upcoming transmission accessed by the terminal device based on LBT 3 (which is a type 1 LBT) includes only one of the sidelink transmissions a to e. For example, the transmission of the terminal device is the sidelink transmission a. For another example, the transmission of the terminal device is the sidelink transmission d.

In some embodiments, the transmission of the terminal device is an MCSt, and the MCSt includes multiple consecutive single slot transmissions.

Exemplarily, as illustrated in FIG. 8, the upcoming transmission accessed by the terminal device based on LBT 3 (which is a type 1 LBT) includes the sidelink transmissions a to e.

In some embodiments, the multiple consecutive single slot transmissions included in the MCSt are all NACK-Only based transmissions.

Exemplarily, as illustrated in FIG. 8, the upcoming transmission accessed by the terminal device based on LBT 3 (which is a type 1 LBT) includes sidelink transmissions a to e. The sidelink transmissions a to e are all NACK-Only based transmissions.

In some embodiments, the multiple consecutive single slot transmissions included in the MCSt are all blind retransmissions.

Exemplarily, as illustrated in FIG. 8, the upcoming transmission accessed by the terminal device based on LBT 3 (which is a type 1 LBT) includes the sidelink transmissions a to e. The sidelink transmissions a to e are all blind retransmissions.

In some embodiments, the multiple consecutive single slot transmissions included in the MCSt are all NACK-Only based transmissions or blind retransmissions.

Exemplarily, as illustrated in FIG. 8, the upcoming transmission accessed by the terminal device based on LBT 3 (which is a type 1 LBT) includes sidelink transmissions a to e. The sidelink transmissions a to e are NACK-Only based transmissions or blind retransmissions. For example, the sidelink transmissions a to c are NACK-Only based transmissions, and the sidelink transmissions d to e are blind retransmissions. For another example, the sidelink transmissions a to b are blind retransmissions, and the sidelink transmissions c to e are NACK-Only based transmissions.

In some embodiments, a number of the NACK-Only based transmissions in the multiple consecutive single slot transmissions included in the MCSt is greater than or equal to a first threshold. Since only one transmission is performed in one slot, the number of the NACK-Only based transmissions may be understood as the number of the NACK-Only based single slot transmissions, or the number of the NACK-Only based slots.

Exemplarily, as illustrated in FIG. 8, the upcoming transmission accessed by the terminal device based on LBT 3 (which is a type 1 LBT) includes sidelink transmissions a to e. The number of the NACK-Only based transmissions in the sidelink transmissions a to e is greater than or equal to the first threshold. For example, the first threshold is 3, and number of the NACK-Only based transmissions in the sidelink transmissions a to e is 3, or 4, or 5. For example, the sidelink transmissions a to d in the sidelink transmissions a to e are all NACK-Only based transmissions. For another example, the sidelink transmissions c to e in the sidelink transmissions a to e are all NACK-Only based transmissions. For another example, the sidelink transmissions a to e are all NACK-Only based transmissions.

In some embodiments, a number of the NACK-Only based transmissions in the multiple consecutive single slot transmissions included in the MCSt is greater than a first threshold. Exemplarily, as illustrated in FIG. 8, the upcoming transmission accessed by the terminal device based on LBT 3 (which is a type 1 LBT) includes the sidelink transmissions a to e. For example, the first threshold is 3, and the number of the NACK-Only based transmissions in the sidelink transmissions a to e is 4 or 5. For example, the sidelink transmissions b to e in the sidelink transmissions a to e are all NACK-Only based transmissions. For another example, the sidelink transmissions a to e are all NACK-Only based transmissions.

In some embodiments, a number of the blind retransmissions in the multiple consecutive single slot transmissions included in the MCSt is greater than or equal to a second threshold. Since only one transmission is performed in one slot, the number of the blind retransmissions may be understood as the number of the single slot transmissions for the blind retransmissions, or the number of the slots for the blind retransmissions.

Exemplarily, as illustrated in FIG. 8, the upcoming transmission accessed by the terminal device based on LBT 3 (which is a type 1 LBT) includes sidelink transmissions a to e. The number of the blind retransmissions in the sidelink transmissions a to e is greater than or equal to the second threshold. For example, if the second threshold is 3, the number of the blind retransmissions in the sidelink transmissions a to e is greater than or equal to 3. For example, the number of the blind retransmissions in the sidelink transmissions a to e is 3, or 4, or 5. For example, the sidelink transmissions a to d in the sidelink transmissions a to e are all blind retransmissions. For another example, the sidelink transmissions c to e in the sidelink transmissions a to e are all blind retransmissions. For another example, the sidelink transmissions a to e are all blind retransmissions.

In some embodiments, a number of the blind retransmissions in the multiple consecutive single slot transmissions included in the MCSt is greater than a second threshold. Exemplary embodiments may refer to the aforementioned examples, which will not be repeated herein.

In some embodiments, a number of the NACK-Only based transmissions and the blind retransmissions in the multiple consecutive single slot transmissions included in the MCSt is greater than or equal to a third threshold.

Exemplarily, as illustrated in FIG. 8, the upcoming transmission accessed by the terminal device based on LBT 3 (which is a type 1 LBT) includes sidelink transmissions a to e. The number of the NACK-Only based transmissions and the blind retransmissions in the sidelink transmissions a to e is greater than or equal to the third threshold. For example, the third threshold is 3, and the number of the NACK-Only based transmissions and the blind retransmissions in the sidelink transmissions a to e is greater than or equal to 3. For example, the sum of the number of the NACK-Only based transmissions and the number of the blind retransmissions in the sidelink transmissions a to e is 3, or 4, or 5. For example, in the sidelink transmissions a to e, the sidelink transmission a is a blind retransmission, the sidelink transmissions b to c are NACK-Only based transmissions. For another example, in the sidelink transmissions a to e, the sidelink transmissions a to b are blind retransmissions, the sidelink transmissions c to d are NACK-Only based transmissions. For another example, in the sidelink transmissions a to e, the sidelink transmissions a to b are blind retransmissions, and the sidelink transmissions c to e are NACK-Only based transmissions.

In some embodiments, a number of the NACK-Only based transmissions and the blind retransmissions in the multiple consecutive single slot transmissions included in the MCSt is greater than a third threshold. Exemplary embodiments may refer to the aforementioned examples, which will not be repeated herein.

In some embodiments, the first threshold, the second threshold, and the third threshold described above may be configured by the network, or pre-configured, or predefined in a protocol, or implemented based on the terminal device itself, which are not limited in the disclosure.

With the above method, the method for determining the contention window is designed for two transmission modes, i.e., the single slot transmission and the MCSt, thereby preventing multiple terminal devices from using a same contention window during LBT, and reducing mutual interference between the terminal devices.

In some embodiments, the first transmission is a sidelink transmission.

In some embodiments, the first transmission is any sidelink transmission.

Exemplarily, as illustrated in FIG. 8, the upcoming transmission accessed by the terminal device based on LBT 3 (which is a type 1 LBT) includes a NACK-Only based transmission and/or a blind retransmission. If the channel access priority of the transmission of the terminal device is 1, the contention window used by the terminal device during LBT 3 is CW₁'. If the channel access priority of the transmission of the terminal device is 2, the contention window used by the terminal device during LBT 3 is CW₂'.

In some embodiments, the first transmission is a sidelink transmission based on type 1 LBT.

Exemplarily, as illustrated in FIG. 8, the upcoming transmission accessed by the terminal device based on LBT 3 (which is a type 1 LBT) includes a NACK-Only based transmission and/or a blind retransmission, and the channel access priority of the transmission of the terminal device is 1. If LBT 2 is a sidelink transmission based on type 1 LBT, the contention window used for the transmission of the terminal device during LBT 3 is CW₁'. If LBT 2 is not a sidelink transmission based on type 1 LBT, and LBT 1 is a sidelink transmission based on type 1 LBT, the contention window used for the transmission of the terminal device during LBT 3 is CW₁.

In some embodiments, the contention window used for the transmission of the terminal device is determined based on the channel access priority of the transmission of the terminal device.

In some embodiments, if the transmission of the terminal device includes a NACK-Only based transmission and/or a blind retransmission, a contention window corresponding to the channel access priority of the transmission of the terminal device, among the latest contention windows used for the first transmission, is determined as a contention window used for the transmission of the terminal device.

Exemplarily, if the transmission of the terminal device includes a NACK-Only based transmission and/or a blind retransmission, and the channel access priority of the transmission of the terminal device is p, the contention window used for the transmission of the terminal device is a latest CWp used for the first transmission.

In some embodiments, the first transmission is a sidelink transmission based on type 1 LBT, and a channel access priority corresponding to the first transmission is same as a channel access priority corresponding to the transmission of the terminal device.

Exemplarily, as illustrated in FIG. 8, the upcoming transmission accessed by the terminal device based on LBT 3 (which is a type 1 LBT) includes a NACK-Only based transmission and/or a blind retransmission. LBT 1 and LBT 2 are sidelink transmissions based on type 1 LBT, the channel access priority of the transmission of the LBT 1 is 1, and the channel access priority of the transmission of the LBT 2 is 2. If the channel access priority of the transmission of the terminal device is 1, the contention window used for the transmission of the terminal device during LBT 3 is CW₁. If the channel access priority of the transmission of the terminal device is 2, the contention window used for the transmission of the terminal device during LBT 3 is CW₂'.

In some embodiments, the first transmission is a single slot transmission, or the first transmission is an MCSt.

With the above method, the method for determining the contention window is designed for sidelink transmissions under three transmission modes, i.e., the NACK-Only based transmission, the blind retransmission and the MCSt, thereby preventing multiple terminal devices from using a same contention window during LBT, and reducing mutual interference between the terminal devices.

The embodiments of the disclosure also provide several methods for determining the channel access priority of the transmission of the terminal device or the channel access priority of the first transmission.

In some embodiments, when the transmission of the terminal device or the first transmission is a single slot transmission, a channel access priority corresponding to the transmission of the terminal device or the first transmission is a channel access priority corresponding to the single slot transmission.

Exemplarily, as illustrated in FIG. 8, the upcoming transmission accessed by the terminal device based on LBT 3 (which is a type 1 LBT) includes only a sidelink transmission a, that is, the transmission of the terminal device is a single slot transmission, and thus the channel access priority of the transmission of the terminal device is the channel access priority of the sidelink transmission a.

In some embodiments, when the transmission of the terminal device or the first transmission is an MCSt, the channel access priority corresponding to the transmission of the terminal device or the first transmission is a lowest priority among channel access priorities corresponding to the multiple consecutive single slot transmissions included in the MCSt, or the channel access priority corresponding to the transmission of the terminal device or the first transmission is a channel access priority corresponding to an earliest single slot transmission in the multiple consecutive single slot transmissions included in the MCSt.

When the transmission of the terminal device or the first transmission is the MCSt, the transmission of the terminal device or the first transmission includes the multiple consecutive single slot transmissions, and therefore, it is necessary to determine the channel access priority corresponding to the transmission of the terminal device or the first transmission based on the channel access priorities respectively corresponding to the above multiple single slot transmissions.

Exemplarily, as illustrated in FIG. 8, the upcoming transmission accessed by the terminal device based on LBT 3 (which is a type 1 LBT) includes sidelink transmissions a to e. That is to say, the transmission of the terminal device is an MCSt, the channel access priority corresponding to the transmission of the terminal device is a lowest priority among channel access priorities corresponding to the sidelink transmissions a to e, or the channel access priority corresponding to the transmission of the terminal device is a channel access priority corresponding to an earliest single slot transmission (i.e., the sidelink transmission a) in the sidelink transmissions a to e.

In some embodiments, the channel access priority may be represented by a priority value. In some embodiments, the smaller the priority value, the higher the channel access priority. In some embodiments, the larger the priority value, the higher the channel access priority.

Exemplarily, the priority values of the channel access priorities corresponding to the sidelink transmissions a to e are 1, 1, 2, 4, and 3 respectively. The smaller the priority value, the higher the channel access priority. If the channel access priority of the transmission of the terminal device is the lowest priority among channel access priorities corresponding to the sidelink transmissions a to e, the channel access priority of the transmission of the terminal device is 4. If the channel access priority of the transmission of the terminal device is the channel access priority corresponding to an earliest single slot transmission (i.e., the sidelink transmission a) in the sidelink transmissions a to e, the channel access priority of the transmission of the terminal device is 1.

With the above method, in sidelink communication, the terminal device can determine the channel access priority of the transmission of the terminal device or the first transmission, so as to determine the contention window used for the sidelink transmission of the terminal device. The multiple terminal devices are prevented from using a same contention window during LBT, and mutual interference between the terminal devices is reduced.

The disclosure also provides a method for determining the contention window used for the transmission of the terminal device in the absence of the first transmission.

In some embodiments, as illustrated in FIG. 9, the method may further include an operation 720 as follows.

In the operation 720, when there is no the first transmission, the terminal device determines a contention window having a minimum value, which corresponds to the channel access priority corresponding to the transmission of the terminal device, as the contention window used for the transmission of the terminal device.

In some embodiments, when the first transmission is any sidelink transmission, then the absence of the first transmission means that no sidelink transmission has been performed by the terminal device prior to the transmission of the terminal device.

Exemplarily, as illustrated in FIG. 8, the upcoming transmission accessed by the terminal device based on LBT 3 (which is a type 1 LBT) includes a NACK-Only based transmission and/or a blind retransmission, LBT 1 and LBT 2 are not successfully performed and no sidelink transmission has been performed by the terminal device, then there is no the first transmission.

In some embodiments, the first transmission is a sidelink transmission based on a type 1 LBT, then the absence of the first transmission means that no sidelink transmission based on the type 1 LBT has been performed by the terminal device prior to the transmission of the terminal device.

Exemplarily, as illustrated in FIG. 8, the upcoming transmission accessed by the terminal device based on LBT 3 (which is a type 1 LBT) includes a NACK-Only based transmission and/or a blind retransmission, each of LBT 1 and LBT 2 is not a type 1 LBT, then there is no the first transmission.

In some embodiments, the first transmission is a sidelink transmission based on a type 1 LBT, and the channel access priority corresponding to the first transmission is the same as the channel access priority corresponding to the transmission of the terminal device. Then, the absence of the first transmission means that no sidelink transmission based on the type 1 LBT has been performed by the terminal device prior to the transmission of the terminal device, here the channel access priority of the sidelink transmission is the same as the channel access priority corresponding to the transmission of the terminal device.

Exemplarily, as illustrated in FIG. 8, the upcoming transmission accessed by the terminal device based on LBT 3 (which is a type 1 LBT) includes a NACK-Only based transmission and/or a blind retransmission, and the channel access priority of the transmission of the terminal device is 3. The channel access priority of the transmission corresponding to LBT 1 for the terminal device is 1, and the channel access priority of the transmission corresponding to LBT 2 for the terminal device is 2, that is, there is no first transmission.

In some embodiments, when there is no the first transmission, a contention window having a minimum value, which corresponds to the channel access priority corresponding to the transmission of the terminal device, is determined as the contention window used for the transmission of the terminal device. That is, based on Table 1, a contention window having a minimum value, which corresponds to the channel access priority corresponding to the transmission of the terminal device, is determined as the contention window used for the transmission of the terminal device.

Exemplarily, if the channel access priority of the transmission of the terminal device is 1, the contention window used for the transmission of the terminal device is the contention window having the minimum value (i.e., 3) among the contention windows allowed for the channel access priority 1. If the channel access priority of the transmission of the terminal device is 2, the contention window used for the transmission of the terminal device is the contention window having the minimum value (i.e., 7) among the contention windows allowed for the channel access priority 2. If the channel access priority of the transmission of the terminal device is 3, the contention window used for the transmission of the terminal device is the contention window having the minimum value (i.e., 15) among the contention windows allowed for the channel access priority 3. If the channel access priority of the transmission of the terminal device is 4, the contention window used for the transmission of the terminal device is the contention window having the minimum value (i.e., 15) among the contention windows allowed for the channel access priority 4.

With the above method, in sidelink communication, the terminal device can also determine the contention window used for the sidelink transmission of the terminal device in the absence of the first transmission. The multiple terminal devices are prevented from using a same contention window during LBT, and mutual interference between the terminal devices is reduced.

In technical solutions provided in embodiments of the disclosure, in sidelink communication, the latest contention window used for the first transmission is determined as a contention window used for sidelink transmission of the terminal device, and the method for determining the contention window is designed for two transmission modes, i.e., the NACK-Only based transmission and the blind retransmission, thereby preventing multiple terminal devices from using a same contention window during LBT, and reducing mutual interference between the terminal devices.

The following are apparatus embodiments of the disclosure that can be used to perform the method embodiments of the disclosure. For details not disclosed in the apparatus embodiments of the disclosure, reference is made to the method embodiments of the disclosure.

Referring to FIG. 10, it illustrates a block diagram of the apparatus for determining the contention window according to an embodiment of the disclosure. The apparatus has a function of implementing the above examples of the method for determining the contention window on the terminal device side, and the function may be implemented by hardware, or by hardware executing corresponding software. The apparatus may be the terminal device described above, or be set in the terminal device. As illustrated in FIG. 10, the apparatus 1000 may include a processing module 1010.

The processing module 1010 is configured to, when transmission of a terminal device includes a NACK-Only based transmission and/or a blind retransmission, determine a latest contention window used for first transmission as a contention window used for the transmission of the terminal device.

In some embodiments, the transmission of the terminal device is a type 1 LBT based transmission.

In some embodiments, the transmission of the terminal device is a sidelink transmission.

In some embodiments, the transmission of the terminal device is an MCSt, and the MCSt includes multiple consecutive single slot transmissions.

In some embodiments, the multiple consecutive single slot transmissions included in the MCSt are all NACK-Only based; or
the plurality of consecutive single slot transmissions included in the MCSt are all blind retransmissions; or
the plurality of consecutive single slot transmissions included in the MCSt are all the NACK-Only based transmissions or the blind retransmissions; or
a number of the NACK-Only based transmissions in a plurality of consecutive single slot transmissions included in the MCSt is greater than or equal to a first threshold; or
a number of the blind retransmissions in the plurality of consecutive single slot transmissions included in the MCSt is greater than or equal to a second threshold; or
a number of the NACK-Only based transmissions and the blind retransmissions in the plurality of consecutive single slot transmissions included in the MCSt is greater than or equal to a third threshold.

In some embodiments, the transmission of the terminal device is an upcoming transmission or a pending transmission.

In some embodiments, the first transmission is any sidelink transmission.

In some embodiments, the first transmission is a sidelink transmission based on type 1 LBT.

In some embodiments, the first transmission is a sidelink transmission based on type 1 LBT, and a channel access priority corresponding to the first transmission is same as a channel access priority corresponding to the transmission of the terminal device.

In some embodiments, the first transmission is a single slot transmission, or the first transmission is an MCSt.

In some embodiments, the processing module 1010 is further configured to, when there is no the first transmission, determine a contention window having a minimum value, which corresponds to the channel access priority corresponding to the transmission of the terminal device, as the contention window used for the transmission of the terminal device.

In some embodiments, when the transmission of the terminal device or the first transmission is a single slot transmission, a channel access priority corresponding to the transmission of the terminal device or the first transmission is a channel access priority corresponding to the single slot transmission.

Alternatively, when the transmission of the terminal device or the first transmission is an MCSt, the channel access priority corresponding to the transmission of the terminal device or the first transmission is a lowest priority among channel access priorities corresponding to the plurality of consecutive single slot transmissions included in the MCSt, or the channel access priority corresponding to the transmission of the terminal device or the first transmission is a channel access priority corresponding to an earliest single slot transmission in the plurality of consecutive single slot transmissions included in the MCSt.

In technical solutions provided in embodiments of the disclosure, in sidelink communication, the latest contention window used for the first transmission is determined as a contention window used for sidelink transmission of the terminal device, and the method for determining the contention window is designed for two transmission modes, i.e., the NACK-Only based transmission and the blind retransmission, thereby preventing multiple terminal devices from using a same contention window during LBT, and reducing mutual interference between the terminal devices.

It should be noted that, when the apparatus provided in the above embodiments is only exemplified by the partition of the above-mentioned functional modules during the implementation of its functions. In practical application, the above-mentioned functions can be assigned to be completed by different function modules as actual needed, that is, the content structure of the apparatus can be partition into different function modules to complete all or part of the functions described above.

With regard to the apparatus in the above embodiments, the specific manner in which the various modules perform operations has been described in detail in the embodiments related to the method, and will not be described in detail here.

Referring to FIG. 11, it illustrates a schematic structural diagram of the terminal device according to an embodiment of the disclosure. The terminal device 1100 may include a processor 1101, a transceiver 1102, and a memory 1103. The processor 1101 is configured to implement the functions of the processing module 1010 described above.

The processor 1101 includes one or more processing cores. The processor 1101 executes various functional applications and information processing by running software programs and modules. The processor 1101 is configured to perform operations other than the sending and receiving operations performed by the terminal device in the method embodiments described above.

The transceiver 1102 may include a receiver and a transmitter. For example, the receiver and the transmitter may be implemented as a same wireless communication component, and the wireless communication component may include a wireless communication chip and a radio frequency antenna. The transceiver 1102 is configured to perform the sending and receiving operations performed by the terminal device in the method embodiments described above.

The memory 1103 may be connected to the processor 1101 and the transceiver 1102.

The memory 1103 may be used to store a computer program executed by a processor, and the processor 1101 may be configured to execute the computer program to implement various operations in the method embodiments described above.

Furthermore, the memory may be implemented by any type of volatile or non-volatile storage device, or a combination thereof. The volatile or non-volatile storage devices include, but are not limited to: a magnetic disk or an optical disk, an electrically erasable programmable read-only memory (EEPROM), an erasable programmable read-only memory (EPROM), a static random-access memory (SRAM), a read-only memory (ROM), a magnetic storage, a flash memory, and a programmable read-only memory (PROM).

In one exemplary embodiment, the processor 1101 is configured to, when transmission of the terminal device includes a NACK-Only based transmission and/or a blind retransmission, determine a latest contention window used for first transmission as a contention window used for the transmission of the terminal device.

For details not described in detail in the embodiment, reference can be made to the above-described embodiments, and will not be repeated here.

In the embodiment of the disclosure, a computer-readable storage medium is further provided. The computer-readable storage medium stores a computer program that, when executed by a processor, causes the processor to implement the method for determining the contention window described above. In an embodiment, the computer-readable storage medium may include a read-only memory (ROM), a random-access memory (RAM), a solid state drive (SSD), an optical disk, or the like. The RAM may include a resistance random access memory (ReRAM) and a dynamic random access memory (DRAM).

In the embodiment of the disclosure, a chip including programmable logic circuits and/or program instructions is further provided. When the chip is in operation, the chip implements the method for determining the contention window described above.

In the embodiment of the disclosure, a computer program product is further provided. The computer program product includes a computer program stored in a computer-readable storage medium. A processor reads and executes the computer program in the computer-readable storage medium to implement the method for determining the contention window described above.

It should be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B.

In the description of the embodiments of the disclosure, the term "correspond/correspondence" may represent that there is a direct or indirect correspondence between the two objects; or, may represent that there is an association relationship between two objects; or, may be a relationship such as indicating and being indicated, configuring and being configured, etc.

In the embodiments of the disclosure, "predefined" may be implemented by storing corresponding codes, tables, or other means which may be used to indicate relevant information in advance within a device (including, for example, a terminal device and a network device), the specific implementation thereof is not be limited in the disclosure. For example, "predefined" may refer to "defined in a protocol".

In some embodiments of the disclosure, the "protocol" may refer to a standard protocol in the field of communications, and for example, it may include an LTE protocol, an NR protocol, and relevant protocols applied to future communication systems, which are not limited in the disclosure.

The term "multiple/a plurality of" mentioned herein refers to "two or more". The term "and/or" is an association relationship that describes associated objects, and indicates that there may be three relationships. For example, A and/or B, which may indicate three situations: A exists alone, A and B exist simultaneously, and B exists alone. The character "/" generally indicates that the anterior and posterior associated objects are in a kind of "or" relationship.

The term "greater than or equal to" mentioned herein may indicate "greater than or equal to" or simply "greater than"; and "less than or equal to" may indicate "less than or equal to" or simply "less than".

Additionally, the number of the operations described herein merely illustrates one possible sequence of execution among the operations. In some other embodiments, the above operations may also be executed out of numbering sequence. For example, two operations with different numbers may be executed simultaneously, or two operations with different numbers may be executed in an order opposite to that illustrated in the diagram.

Those skilled in the art should be aware that in one or more examples described above, the functions described in the embodiments of the disclosure may be implemented in hardware, software, firmware, or any combination thereof. When implemented in software, these functions may be stored in a computer readable medium or transmitted as one or more instructions or codes on a computer readable medium. The computer-readable medium includes a computer storage medium and a communication medium, and the communication medium includes any medium that facilitates the transmission of a computer program from one place to another. The storage medium may be any available medium accessible by a general-purpose or special-purpose computer.

The embodiments described above are merely exemplary and are not intended to limit the scope of the disclosure. Any modifications, equivalent substitutions, improvements, or the like made within the spirit and principles of the disclosure shall be included within the scope of protection of the disclosure.

## Claims

1. A method for determining a contention window, performed by a terminal device, the method comprising:
when transmission of the terminal device comprises a negative acknowledgement-only (NACK-Only) based transmission and/or a blind retransmission, determining a latest contention window used for first transmission as a contention window used for the transmission of the terminal device.

2. The method of claim 1, wherein the transmission of the terminal device is a transmission based on type 1 listen before talk (LBT).

3. The method of claim 1 or 2, wherein the transmission of the terminal device is a sidelink transmission.

4. The method of any one of claims 1 to 3, wherein the transmission of the terminal device is a multi-consecutive slots transmission (MCSt), and the MCSt comprises a plurality of consecutive single slot transmissions.

5. The method of claim 4, wherein
the plurality of consecutive single slot transmissions comprised in the MCSt are all NACK-Only based transmissions; or
the plurality of consecutive single slot transmissions comprised in the MCSt are all blind retransmissions; or
the plurality of consecutive single slot transmissions comprised in the MCSt are all the NACK-Only based transmissions or the blind retransmissions; or
a number of the NACK-Only based transmissions in the plurality of consecutive single slot transmissions comprised in the MCSt is greater than or equal to a first threshold; or
a number of the blind retransmissions in the plurality of consecutive single slot transmissions comprised in the MCSt is greater than or equal to a second threshold; or
a number of the NACK-Only based transmissions and the blind retransmissions in the plurality of consecutive single slot transmissions comprised in the MCSt is greater than or equal to a third threshold.

6. The method of any one of claims 1 to 5, wherein the transmission of the terminal device is an upcoming transmission or a pending transmission.

7. The method of any one of claims 1 to 6, wherein the first transmission is any sidelink transmission.

8. The method of any one of claims 1 to 6, wherein the first transmission is a sidelink transmission based on type 1 LBT.

9. The method of any one of claims 1 to 6, wherein the first transmission is a sidelink transmission based on type 1 LBT, and a channel access priority corresponding to the first transmission is same as a channel access priority corresponding to the transmission of the terminal device.

10. The method of any one of claims 1 to 9, wherein the first transmission is a single slot transmission, or the first transmission is an MCSt.

11. The method of any one of claims 1 to 10, wherein the method further comprises:
when there is no the first transmission, determining a contention window having a minimum value, which corresponds to a channel access priority corresponding to the transmission of the terminal device, as the contention window used for the transmission of the terminal device.

12. The method of any one of claims 1 to 11, wherein
when the transmission of the terminal device or the first transmission is a single slot transmission, a channel access priority corresponding to the transmission of the terminal device or the first transmission is a channel access priority corresponding to the single slot transmission; or
when the transmission of the terminal device or the first transmission is an MCSt, the channel access priority corresponding to the transmission of the terminal device or the first transmission is a lowest priority among channel access priorities corresponding to a plurality of consecutive single slot transmissions comprised in the MCSt, or the channel access priority corresponding to the transmission of the terminal device or the first transmission is a channel access priority corresponding to an earliest single slot transmission in the plurality of consecutive single slot transmissions comprised in the MCSt.

13. An apparatus for determining a contention window, comprising:
a processing module, configured to, when transmission of a terminal device comprises a negative acknowledgement-only (NACK-Only) based transmission and/or a blind retransmission, determine a latest contention window used for first transmission as a contention window used for the transmission of the terminal device.

14. The apparatus of claim 13, wherein the transmission of the terminal device is a transmission based on type 1 listen before talk (LBT).

15. The apparatus of claim 13 or 14, wherein the transmission of the terminal device is a sidelink transmission.

16. The apparatus of any one of claims 13 to 15, wherein the transmission of the terminal device is a multi-consecutive slots transmission (MCSt), and the MCSt comprises a plurality of consecutive single slot transmissions.

17. The apparatus of claim 16, wherein
the plurality of consecutive single slot transmissions comprised in the MCSt are all NACK-Only based transmissions; or
the plurality of consecutive single slot transmissions comprised in the MCSt are all blind retransmissions; or
the plurality of consecutive single slot transmissions comprised in the MCSt are all the NACK-Only based transmissions or the blind retransmissions; or
a number of the NACK-Only based transmissions in the plurality of consecutive single slot transmissions comprised in the MCSt is greater than or equal to a first threshold; or
a number of the blind retransmissions in the plurality of consecutive single slot transmissions comprised in the MCSt is greater than or equal to a second threshold; or
a number of the NACK-Only based transmissions and the blind retransmissions in the plurality of consecutive single slot transmissions comprised in the MCSt is greater than or equal to a third threshold.

18. The apparatus of any one of claims 13 to 17, wherein the transmission of the terminal device is an upcoming transmission or a pending transmission.

19. The apparatus of any one of claims 13 to 18, wherein the first transmission is any sidelink transmission.

20. The apparatus of any one of claims 13 to 18, wherein the first transmission is a sidelink transmission based on type 1 LBT.

21. The apparatus of any one of claims 13 to 18, wherein the first transmission is a sidelink transmission based on type 1 LBT, and a channel access priority corresponding to the first transmission is same as a channel access priority corresponding to the transmission of the terminal device.

22. The apparatus of any one of claims 13 to 21, wherein the first transmission is a single slot transmission, or the first transmission is an MCSt.

23. The apparatus of any one of claims 13 to 22, wherein the processing module is further configured to, when there is no the first transmission, determine a contention window having a minimum value, which corresponds to a channel access priority corresponding to the transmission of the terminal device, as the contention window used for the transmission of the terminal device.

24. The apparatus of any one of claims 13 to 23, wherein
when the transmission of the terminal device or the first transmission is a single slot transmission, a channel access priority corresponding to the transmission of the terminal device or the first transmission is a channel access priority corresponding to the single slot transmission; or
when the transmission of the terminal device or the first transmission is an MCSt, the channel access priority corresponding to the transmission of the terminal device or the first transmission is a lowest priority among channel access priorities corresponding to a plurality of consecutive single slot transmissions comprised in the MCSt, or the channel access priority corresponding to the transmission of the terminal device or the first transmission is a channel access priority corresponding to an earliest single slot transmission in the plurality of consecutive single slot transmissions comprised in the MCSt.

25. A terminal device, comprising: a memory for storing a computer program, and a processor for executing the computer program to implement the method of any one of claims 1 to 12.

26. A computer-readable storage medium, having stored thereon a computer program that, when executed by a processor, causes the processor to implement the method of any one of claims 1 to 12.

27. A chip, comprising programmable logic circuits and/or program instructions, wherein when the chip is in operation, the chip implements the method of any one of claims 1 to 12.

28. A computer program product, comprising computer instructions stored in a computer-readable storage medium, wherein a processor reads and executes the computer instructions in the computer-readable storage medium to implement the method of any one of claims 1 to 12.
